# EUROPEAN PATENT SPECIFICATION

(11) **EP 4 047 245 B1**
(45) Date of publication and mention of the grant of the patent: **10.04.2024**
(21) Application number: 22157160.7
(22) Date of filing: 17.02.2022
(51) Int. Cl.: F16H 61/421, F16H 61/472

(54) **CONTROL METHOD FOR A HYDRAULIC TRANSMISSION OF AN AGRICULTURAL VEHICLE OR EARTH-MOVING MACHINE AND AGRICULTURAL VEHICLE OR EARTH-MOVING MACHINE IMPLEMENTING THE METHOD**
STEUERUNGSVERFAHREN FÜR EIN HYDRAULISCHES GETRIEBE EINES LANDWIRTSCHAFTLICHEN FAHRZEUGS ODER EINER ERDBEWEGUNGSMASCHINE UND LANDWIRTSCHAFTLICHES FAHRZEUG ODER ERDBEWEGUNGSMASCHINE ZUR DURCHFÜHRUNG DES VERFAHRENS
PROCÉDÉ DE COMMANDE D'UNE TRANSMISSION HYDRAULIQUE D'UN VÉHICULE AGRICOLE OU D'UN ENGIN DE TERRASSEMENT ET VÉHICULE AGRICOLE OU ENGIN DE TERRASSEMENT METTANT EN OEUVRE LE PROCÉDÉ

(30) Priority: 17.02.2021 IT 202100003677
(43) Date of publication of application: 24.08.2022
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT)
(74) Representative: CNH Industrial IP Department

(56) References cited:
- EP-A2- 2 682 648
- JP-A- 2001 324 015
- US-A- 5 177 964
- US-A1- 2010 042 301
- US-A1- 2010 089 051

## Description

### Field of the invention

The present invention relates to the field of hydraulic transmissions and in particular to the field of those transmissions implementing two operating modes: a first mode in which the hydraulic motor is forced to the maximum displacement to perform operations at very low speed and a second operating mode in which the displacement of the hydraulic motor varies exclusively according to the perceived load to perform operations at higher speed.

### State of the art

In agricultural and earth-moving machinery, the transmission to transfer the motion from a prime mover to the wheels is of the hydraulic type. Very often, the transmission defines a series configuration, in which the prime mover drives a variable displacement hydraulic pump, which, in turn, drives a hydraulic motor which can have either fixed or variable displacement. Obviously, there are no further mechanical parts that contribute to the revolution of the wheel except the hydraulic motor.

The pump and the hydraulic motor are interconnected in a per se known manner by means of a so-called hydraulic delivery line and a hydraulic return line.

Between the hydraulic motor and the wheels there is often, but not always, a gearbox with discrete ratios. Very often there are just two ratios, to facilitate the autonomous movement of the vehicle from one workplace to another workplace.

Regardless of the presence of a discrete gearbox, agricultural vehicle are often used to perform operations at very low speeds, ie for speeds below 1 - 2 km/h.

For an agricultural vehicle, a typical operation that requires such a speed is sowing, in which a device connected to the vehicle inserts at least one seed into the ground precisely and with predetermined distances between one seed and another.

For an earthmoving machine, a typical operation that requires such speed is the impact-free approach to a truck to unload the material from the tool.

Under these operating conditions, the variable displacement hydraulic motor is forced to the maximum displacement so as to express a high transmission ratio, resulting in low speed and high torque.

When this operating mode is disabled, the hydraulic motor, according to its characteristics, can operate freely, in the sense that the displacement depends exclusively on the load perceived by the wheel. Thus, the displacement of the hydraulic motor is inversely proportional to the speed of the vehicle.

Although there are hydraulic motors whose displacement can be electrically controlled in an approximately continuous way as disclosed in JP2001324015A, most of the hydraulic motors for earth-moving machines and agricultural vehicles provide the possibility to force the motor only to the maximum displacement. For convenience, such hydraulic motors are defined as ON/OFF motors, meaning that it is not possible to control the displacement in any further way.

Generally, the revolution speed of the prime mover is directly proportional to the position of the accelerator lever and the displacement of the pump is directly proportional to the rotational speed of the prime mover.

Consequently, the speed of the vehicle and the revolution speed of the prime mover are approximately directly proportional to each other. This first mode of operation is for convenience defined as "accelerator-base", since the revolution speed of the prime mover is approximately directly proportional to the position of the accelerator lever and the speed of the vehicle depends on the rotational speed of the prime mover.

The term "about" shows that the control is in open loop, therefore an increase in the slope can cause the vehicle and also the prime mover to slow down with a consequent increase in the displacement of the hydraulic motor.

The displacement of the hydraulic pump is generally controlled proportionally to the revolution speed of the prime mover according to a fixed standard characteristic, preferably linear.

The first operating mode is often referred to as "Turtle", while the second operating mode is referred to as "Rabbit". Switching between one mode and the other is generally operated by means of a button or other man/machine interface device in the vehicle cabin.

### Summary of the invention

The purpose of the present invention is to indicate a method of switching between the two operating conditions described above, which make the use of an agricultural vehicle or earth-moving machine easier and more convenient.

The basic idea of the present invention is to automatically switch to Turtle mode when an accelerator signal is lower than a predetermined threshold and the vehicle speed is lower than a first speed threshold or when the accelerator signal is higher than said predetermined threshold and the vehicle speed is lower than a second predetermined threshold speed lower than the first predetermined threshold speed and to switch into Rabbit mode in the opposite conditions, i.e. when the vehicle speed exceeds the first predetermined threshold speed and the accelerator signal it is lower than the predetermined threshold or when the vehicle speed is higher than the second predetermined threshold speed and the accelerator signal is greater than the predetermined threshold.

Advantageously, the first predetermined threshold is greater than the second predetermined threshold in order to more clearly interpret the driver's intention to maintain a low speed in relation to the operations he/she intends to perform with the vehicle.

Conversely, when the operator's intention is to accelerate rapidly, the switching into Rabbit is performed as soon as possible.

According to a preferred aspect of the present invention, automatic switching can cause an unexpected jerk with discomfort for the driver.

According to a preferred variant of the present invention, when switching to Rabbit mode, the hydraulic pump is controlled to instantly reduce its own displacement and then return to the typical characteristic of displacement control, preferably linear, directly proportional to the revolution speed of the motor first.

According to a first preferred implementation of this preferred variant of the invention, the "return" to the basic characteristic is achieved by means of a connecting ramp which can begin and end in a predetermined time interval, or in a predetermined speed range of the prime mover, so that, for example, in 200 or 300 revolutions/minute, the characteristic curve of the displacement as a function of the revolution speed of the motor is joined with the fixed standard characteristic.

The dependent claims describe preferred variants of the invention, forming an integral part of this description.

### Brief description of the figures

Further objects and advantages of the present invention will become clear from the following detailed description of an example of its embodiments (and its variants) and from the attached drawings given purely by way of non-limiting explanation, in which:
Figure 1 shows an example of hydraulic transmission in series configuration with in evidence processing means configured to supervise and control the hydraulic transmission according to the method object of the present invention;
Figure 2 shows a diagram of the revolution speed of the prime mover/control signal of the displacement of the hydraulic pump, exemplifying a preferred variant of the present invention.

The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless it is specifically indicated or inferred from the text.

### Detailed description of exemplary embodiments

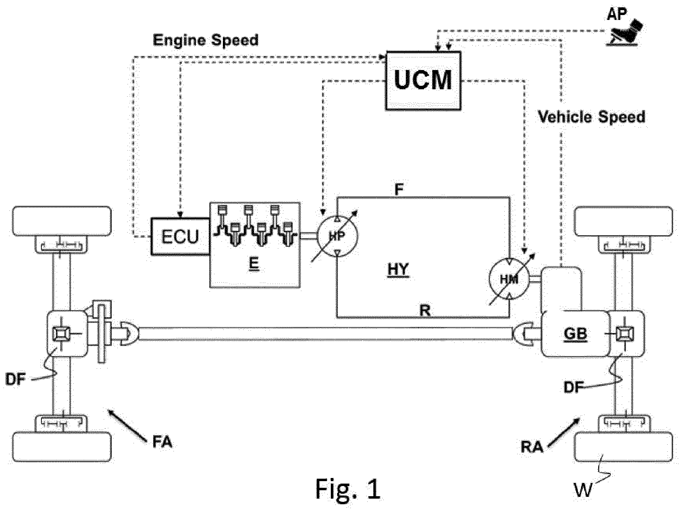

Figure 1 shows a propulsion system and in particular a hydraulic transmission of an agricultural vehicle or an earth-moving machine of the series type, in which a vehicular wheel W is driven in rotation by a hydraulic motor HM of a hydrostat HY which comprises a hydraulic pump HP connected to the hydraulic motor by means of a delivery line F and a return line R.

The hydraulic motor is of the variable displacement type, in which the displacement is variable and is a function of a load applied to the wheel according to a first operating mode, generally defined Rabbit, since, in this operating mode, the vehicle can reach a relative maximum speed.

The hydraulic motor can be forced to maximum displacement by activating a command signal, according to a second operating mode, generally named Turtle, in which the vehicle moves slowly but with the maximum available torque.

The hydraulic motor is otherwise not controllable to assume displacements different from the maximum one. In fact, when the control signal is deactivated, the displacement of the hydraulic motor depends exclusively on the resistant torque to the wheel W.

The present method finds application in those transmissions in which by means of a control signal, the displacement of the hydraulic motor can only be brought to its maximum value, and cannot be controlled in any other way.

The method object of the present invention is described with the help of the following table

In which
- SP indicates the vehicle speed, which in figure 1 is indicated as "vehicle speed",
- SP_TH1 indicates a first vehicle speed threshold
- SP_TH2 indicates a second vehicle speed threshold where SP_TH2 < SP_TH1
- AC indicates a signal generated by the accelerator lever or an equivalent device, albeit automatic, which can vary from a minimum to a maximum;

AC_TH indicates an accelerator signal threshold.

| | AC < AC_TH | AC_TH < AC |
|---|---|---|
| SP > SP_TH1 | Rabbit | Rabbit |
| SP_TH2 < SP < SP_TH1 | Turtle | Rabbit |
| SP < SP_TH2 | Turtle | Turtle |

Therefore, the command signal that causes the activation and maintenance of the second operating condition "Turtle" is activated when
- the accelerator signal is below the predetermined threshold AC_TH and the vehicle speed is below the first speed threshold SP_TH1 or
- the accelerator signal is higher than said predetermined threshold AC_TH and the vehicle speed is lower than the second speed threshold SP_TH2, which is lower than the first speed threshold SP_TH1.

This command signal is deactivated in the opposite conditions, returning to the Rabbit configuration.

Preferably, the threshold AC_TH of the accelerator signal is comprised between 10% and 30% of the nominal (100%) accelerator signal and more preferably is set at 20% of the nominal accelerator signal.

Preferably, the first speed threshold SP_TH1 is comprised between 0.7 and 2 km/h and more preferably it is equal to 1 km/h.

Preferably, the second speed threshold SP_TH2 is comprised between 0.2 and 0.6 km/h and more preferably it is 0.5 km/h. Obviously, the values of the aforesaid thresholds can be suitably chosen and combined in relation to the circumstances and above all in relation to the usual speed that the vehicle must maintain during a low or very low speed mission.

In any case, it is considered that the intervals indicated above are optimal.

In fact, it is particularly useful if these thresholds can be set directly by the driver through a man-machine interface, so that he can find the maximum comfort in the automatic switching between the Turtle and Rabbit configuration and vice versa.

With reference to Figure 1, the propulsion system comprises a prime mover E, generally an internal combustion engine, for example Diesel or spark ignition one.

The prime mover is configured to drive a variable geometry hydraulic pump HP in rotation, which feeds the hydraulic motor HM by means of the aforementioned forward F and return R lines.

The hydraulic motor has a shaft operatively associated with a towing axle RA of the vehicle.

Preferably, but not necessarily, this association is achieved by means of a discrete gearbox GB. Generally, the secondary shaft of the gearbox GB drives in rotation a port of a differential DF, to guide the two drive shafts of the driving axle RA in rotation. The configuration shown in Figure 1 is four-wheel drive, so that a rear driving axle RA and a front driving axle FA are identified.

An elaborating unit ECU controls the operation of the prime mover.

A vehicle processing unit UCM interfaces with the engine control processing unit ECU and controls the hydraulic transmission HY as well as monitors the position of vehicle control levers, buttons and commands, both in relation to vehicle movement and operation arms, shovels, etc .. with which the agricultural vehicle or earth-moving machine is or can be equipped.

AP indicates the accelerator pedal or lever.

The existence of two distinct processing units is entirely optional. A single processing unit can control both the prime mover and all the other vehicle functions and monitor the activation of commands by the operator.

The present invention is preferably implemented in the vehicle processing unit UCM, but there is no impediment to implementing it in the ECU.

According to a preferred implementation of the invention, the hydraulic pump has a variable displacement and its displacement is managed according to a preordained management strategy.

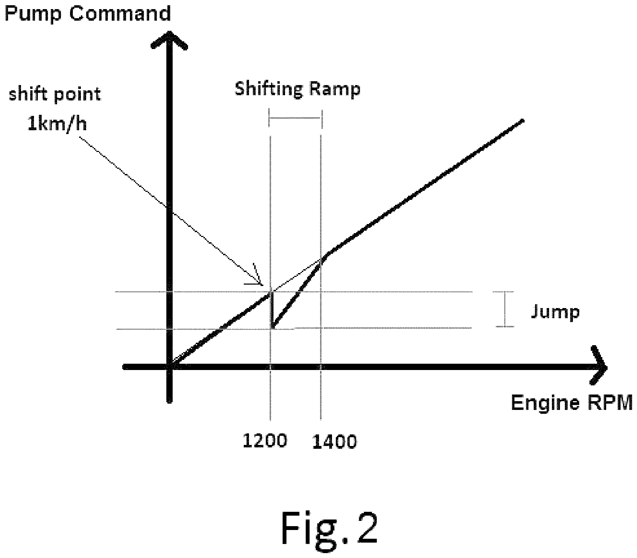

Figure 2 shows a control strategy in which, essentially, the pump displacement is linearly proportional to the "Engine Speed" revolution speed of the prime mover E.

According to a preferred variant of the present invention, when switching into Rabbit mode, the hydraulic pump is controlled to instantly reduce its displacement and then return to the typical characteristic of displacement control, preferably linear, directly proportional to the revolution speed of the motor first.

Figure 2 shows a diagram in which the abscissa axis shows the revolution speed "Engine RPM" of the prime mover E and on the ordinate axis the "Pump Command" control signal of the HP hydraulic pump displacement.

The same figure indicates the "shift point 1km/h" which corresponds to about 1200 rpm.

In the example, therefore, the point 1200 rpm corresponds to 1 km/h, which therefore corresponds to the first threshold SP_TH1.

At the changeover from Turtle to Rabbit there is a reduction indicated with "Jump" of the pump displacement to compensate the changeover of the hydraulic motor.

The extent of the reduction can be fixed or parameterized according to the extent of the change in the displacement of the hydraulic motor at the switching instant.

After the sudden reduction of the pump displacement, this can be forced to join ("Shifting Ramp") with the fixed standard characteristic
- in a preordained time interval
- in a predetermined range of revolution speed of the prime mover.

In the first case, this means that a "recovery" signal is added to the accelerator lever signal, regardless of whether it is fixed or variable, such that to return the displacement control signal of the hydraulic pump over the fixed standard characteristic.

In the second case, which is visible in figure 2, instead, the "recovery" signal is added to the control signal of the hydraulic pump as the motor revolution speed increases until it joins the standard characteristic.

Preferably, the recovery signal has the form of a linear ramp.

The time interval is preferably chosen in order to allow the driver to easily compensate for the reduction in pump displacement that occurs during switching from Turtle to Rabbit with the position of the accelerator lever.

According to a preferred variant of the invention, the width of the time interval within which the control signal of the displacement of the hydraulic pump is joined with the fixed standard characteristic is a function of the position of the accelerator lever, in particular the greater the opening of the accelerator and the shorter the above time interval.

The range of revolution speed of the prime mover is chosen so as to make the relative increase in the progression of the revolution speed of the hydraulic pump comfortable.

In the example, this range is just 200 engine revolutions, but it can be suitably wider.

The present invention also relates to an agricultural vehicle or an earth-moving machine comprising a series-type hydraulic transmission, in which a vehicular wheel W is driven in rotation by a variable displacement hydraulic motor HM, wherein the displacement is
- variable and function of a load applied to the wheel by defining a first operating mode e
- fixed at its maximum displacement value due to the activation of a command signal, defining a second operating mode.

The maximum displacement value depends on the constructional characteristics of the hydraulic motor itself, therefore "relative" means that this maximum value is relative to the hydraulic motor implemented.

According to the present invention, the transmission is arranged, preferably under the control of the control unit UCM, to automatically activate said command signal when one of the following conditions is verified:
- an accelerator signal is lower than a predetermined threshold AC_TH and the vehicle speed is lower than a first speed threshold SP_TH1 or
- the accelerator signal is higher than said predetermined threshold AC_TH and the vehicle speed is lower than a second speed threshold SP_TH2 lower than the first speed threshold SP_TH1
and of automatically deactivating said command signal in the opposite conditions, namely when none of the two conditions is verified.

The present invention can be advantageously implemented by means of a computer program, which comprises coding means for carrying out the steps of the method, when this program is executed on a computer. Therefore, it is intended that the scope of protection extends to said computer program and further to computer readable means comprising a recorded message, said computer readable means comprising program coding means for carrying the steps of the method, when said program is run on a computer.

From the above description the person skilled in the art is able to realize the object of the invention without introducing further construction details.

## Claims

1. Method of controlling a hydraulic transmission of an agricultural vehicle or earth-moving machine, in which the hydraulic transmission is of the series type, in which a vehicle wheel (W) is driven in rotation by a variable displacement hydraulic motor (HM), where the displacement is
- variable and function of a load applied to the wheel by defining a first operating mode e
- fixed at a relative maximum displacement value due to the activation of a command signal, defining a second operating mode,
the method being **characterized in that** it automatically activates said control signal when one of the following conditions is verified:
- an accelerator signal is below a predetermined threshold (AC_TH) and the vehicle speed is below a first speed threshold (SP_TH1) or
- the accelerator signal is higher than said predetermined threshold (AC_TH) and the vehicle speed is lower than a second speed threshold (SP_TH2) lower than the first speed threshold (SP_TH1)
and to automatically deactivate said control signal when none of said conditions is verified.

2. Method according to claim 1, wherein said accelerator threshold (AC_TH) is comprised between 10% and 30% of the nominal accelerator signal.

3. Method according to claim 2, wherein said accelerator threshold (AC_TH) is 20%.

4. Method according to any one of the preceding claims, wherein said first speed threshold (SP_TH1) is comprised between 0.7 and 2 km/h.

5. Method according to claim 4, wherein said first speed threshold (SP_TH1) is 1 km/h.

6. Method according to any one of the preceding claims, wherein said second speed threshold (SP_TH2) is comprised between 0.2 and 0.6 km/h.

7. Method according to claim 6, wherein said second speed threshold (SP_TH2) is 0.5 km/h.

8. Method according to any one of the preceding claims, in which the hydraulic motor is powered by a variable displacement hydraulic pump, in which the displacement is controlled proportionally to the engine speed of the prime mover (E), according to a fixed standard characteristic, preferably linear, directly proportional to the revolution speed of the prime mover,
the method further comprising
- a step of suddenly reducing the displacement of the hydraulic pump (HP), in correspondence with the activation of said control signal,
- a subsequent step of gradually increasing said displacement until returning to the fixed standard characteristic.

9. Method according to claim 8, wherein said subsequent step is carried out in a predetermined time interval or in a predetermined speed interval of revolution of the prime mover having as a lower end a revolution speed relative to said activation of the control signal.

10. Method according to claim 9, wherein when said subsequent step is performed in a predetermined time interval, the predetermined time interval is a function of the position of an accelerator lever.

11. Computer program comprising program-coding means adapted to carry out all the steps of any one of claims 1 to 10, when said program is run on a computer.

12. Computer readable means comprising a recorded program, said computer readable means comprising program coding means adapted to perform all steps of any one of claims 1 to 10, when said program is run on a computer.

13. Agricultural vehicle or earth-moving machine comprising a series-type hydraulic transmission, in which a vehicle wheel (W) is rotated by a variable displacement hydraulic motor (HM), in which the displacement is
- variable and function of a load applied to the wheel by defining a first operating mode e
- fixed at its maximum displacement value due to the activation of a command signal, defining a second operating mode,
**characterized in that** the transmission is arranged to automatically activate said control signal when one of the following conditions is verified:
- an accelerator signal is below a predetermined threshold (AC_TH) and the vehicle speed is below a first speed threshold (SP_TH1) or
- the accelerator signal is higher than said predetermined threshold (AC_TH) and the vehicle speed is lower than a second speed threshold (SP_TH2) lower than the first speed threshold (SP_TH1)
and of automatically deactivating said command signal when none of said conditions is verified.

## Patentansprüche

1. Verfahren zur Steuerung eines hydraulischen Getriebes eines landwirtschaftlichen Fahrzeugs oder einer Erdbewegungsmaschine, wobei das hydraulische Getriebe vom Reihenschaltungs-Typ ist, wobei ein Fahrzeugrad (W) durch einen hydraulischen Verstellmotor (HM) in Drehung versetzt wird, und wobei die Verstellung
- variabel und eine Funktion einer Last ist, die auf das Rad aufgebracht wird, wodurch ein erster Betriebsmodus e definiert wird,
- auf einen relativen maximalen Wert der Verstellung infolge der Aktivierung eines Anweisungssignals festgelegt wird, wodurch ein zweiter Betriebsmodus definiert wird,
**dadurch gekennzeichnet, dass**
das Steuersignal automatisch aktiviert wird, wenn eine der folgenden Bedingungen vorliegt:
- ein Beschleunigersignal liegt unter einem vorbestimmten Schwellenwert (AC_TH) und die Fahrzeuggeschwindigkeit liegt unter einem ersten Geschwindigkeits-Schwellenwert (SP_TH1) oder
- das Beschleunigersignal liegt über dem vorbestimmten Schwellenwert (AC_TH) und die Fahrzeuggeschwindigkeit liegt unter einem zweiten Geschwindigkeits-Schwellenwert (SP_TH2), der kleiner ist als der erste Geschwindigkeits-Schwellenwert (SP_TH1), und
das Steuersignal automatisch deaktiviert wird, wenn keine der Bedingungen vorliegt.

2. Verfahren nach Anspruch 1, wobei der Beschleuniger-Schwellenwert (AC_TH) zwischen 10% und 30% des nominalen Beschleunigersignals beträgt.

3. Verfahren nach Anspruch 2, wobei der Beschleuniger-Schwellenwert (AC_TH) 20% beträgt.

4. Verfahren nach einem der vorhergehenden Ansprüche, wobei der erste Geschwindigkeits-Schwellenwert (SP_TH1) zwischen 0,7 und 2 km/h beträgt.

5. Verfahren nach Anspruch 4, wobei der erste Geschwindigkeits-Schwellenwert (SP_TH1) 1 km/h beträgt.

6. Verfahren nach einem der vorhergehenden Ansprüche, wobei der zweite Geschwindigkeits-Schwellenwert (SP_TH2) zwischen 0,2 und 0,6 km/h beträgt.

7. Verfahren nach Anspruch 6, wobei der zweite Geschwindigkeits-Schwellenwert (SP_TH2) 0,5 km/h beträgt.

8. Verfahren nach einem der vorhergehenden Ansprüche, wobei der Hydraulikmotor durch eine hydraulische Verstellpumpe angetrieben wird, wobei die Verstellung proportional zur Motordrehzahl des Hauptantriebsmotors (E) gesteuert wird, gemäß einer festgelegten Standard-Charakteristik, vorzugsweise linear, direkt proportional zur Drehzahl des Hauptantriebsmotors, wobei das Verfahren weiterhin umfasst:
- einen Schritt zur abrupten Reduzierung der Verstellung der Hydraulikpumpe (HP), gemäß der Aktivierung des Steuersignals,
- einen anschließenden Schritt zur schrittweisen Anhebung der Verstellung, bis die festgelegte Standard-Charakteristik wieder erreicht ist.

9. Verfahren nach Anspruch 8, wobei der anschließende Schritt in einem vorbestimmten Zeitintervall oder in einem vorbestimmten Drehzahlintervall des Hauptantriebsmotors ausgeführt wird, der als ein unteres Ende eine Drehzahl bezüglich der Aktivierung des Steuersignals hat.

10. Verfahren nach Anspruch 9, wobei, wenn der anschließende Schritt in einem vorbestimmten Zeitintervall ausgeführt wird, das vorbestimmte Zeitintervall eine Funktion der Position eines Beschleunigerhebels ist.

11. Computerprogramm mit einer programmcodierten Einrichtung, die dazu eingerichtet ist, sämtliche Schritte nach einem der Ansprüche 1 bis 10 auszuführen, wenn das Programm auf einem Computer läuft.

12. Computerlesbare Einrichtung mit einem aufgezeichneten Programm, wobei die computerlesbare Einrichtung eine programmcodierte Einrichtung aufweist, die dazu eingerichtet ist, sämtliche Schritte nach einem der Ansprüche 1 bis 10 auszuführen, wenn das Programm auf einem Computer läuft.

13. Landwirtschaftliches Fahrzeug oder Erdbewegungsmaschine mit einem hydraulischen Getriebe vom Reihenschaltungs-Typ, wobei ein Fahrzeugrad (W) durch einen hydraulischen Verstellmotor (HM) in Drehung versetzt wird, wobei die Verstellung
- variabel und eine Funktion einer Last ist, die auf das Rad aufgebracht wird, wodurch ein erster Betriebsmodus e definiert wird,
- auf einen relativen maximalen Wert der Verstellung infolge der Aktivierung eines Anweisungssignals festgelegt wird, wodurch ein zweiter Betriebsmodus definiert wird,
**dadurch gekennzeichnet, dass**
das Getriebe dazu eingerichtet ist, das Steuersignal automatisch zu aktivieren, wenn eine der folgenden Bedingungen vorliegt:
- ein Beschleunigersignal liegt unter einem vorbestimmten Schwellenwert (AC_TH) und die Fahrzeuggeschwindigkeit liegt unter einem ersten Geschwindigkeits-Schwellenwert (SP_TH1) oder
- das Beschleunigersignal liegt über dem vorbestimmten Schwellenwert (AC_TH) und die Fahrzeuggeschwindigkeit liegt unter einem zweiten Geschwindigkeits-Schwellenwert (SP_TH2), der kleiner ist als der erste Geschwindigkeits-Schwellenwert (SP_TH1), und
das Steuersignal automatisch zu deaktivieren, wenn keine der Bedingungen vorliegt.

## Revendications

1. Procédé de commande d'une transmission hydraulique d'un véhicule agricole ou d'un engin de terrassement, dans lequel la transmission hydraulique est du type série, dans lequel une roue (W) du véhicule est entraînée en rotation par un moteur hydraulique (HM) à cylindrée variable, où la cylindrée est
- variable et fonction d'une charge appliquée à la roue en définissant un premier mode de fonctionnement e
- fixée à une valeur de cylindrée maximale relative en raison de l'activation d'un signal de commande, définissant un second mode de fonctionnement,
le procédé étant **caractérisé en ce qu'**il active automatiquement ledit signal de commande lorsque l'une des conditions suivantes est vérifiée :
- un signal d'accélération est inférieur à un seuil prédéterminé (AC_TH) et la vitesse du véhicule est inférieure à un premier seuil de vitesse (SP_THI) ou
- le signal d'accélération est supérieur audit seuil prédéterminé (AC_TH) et la vitesse du véhicule est inférieure à un second seuil de vitesse (SP_TH2) inférieur au premier seuil de vitesse (SP_THI)
et pour désactiver automatiquement ledit signal de commande lorsqu'aucune desdites conditions n'est vérifiée.

2. Procédé selon la Revendication 1, dans lequel ledit seuil d'accélération (AC_TH) est compris entre 10 et 30 % de la Revendication 1, dans laquelle ledit seuil est compris entre 10 % et le signal d'accélération nominal.

3. Procédé selon la Revendication 2, dans lequel ledit seuil d'accélération (AC_TH) est de 20 %.

4. Procédé selon l'une quelconque des revendications précédentes, dans lequel ledit premier seuil de vitesse (SP_THI) est compris entre 0,7 et 2 km/h.

5. Procédé selon la Revendication 4, dans lequel ledit premier seuil de vitesse (SP_THI) est de 1 km/h.

6. Procédé selon l'une quelconque des revendications précédentes, dans lequel ledit second seuil de vitesse (SP_TH2) est compris entre 0,2 et 0,6 km/h.

7. Procédé selon la Revendication 6, dans lequel ledit second seuil de vitesse (SP_TH2) est de 0,5 km/h.

8. Procédé selon l'une quelconque des revendications précédentes, dans lequel le moteur hydraulique est alimenté par une pompe hydraulique à cylindrée variable, dans laquelle la cylindrée est contrôlée proportionnellement au régime moteur du moteur primaire (E), selon une caractéristique standard fixe, de préférence linéaire, directement proportionnelle à la vitesse de rotation du moteur primaire,
le procédé comprenant en outre
- une étape de réduction brutale de la cylindrée de la pompe hydraulique (HP), en liaison avec l'activation dudit signal de commande,
une étape ultérieure consistant à augmenter progressivement ladite cylindrée jusqu'à revenir à la caractéristique standard fixe.

9. Procédé selon la Revendication 8, dans lequel ladite étape ultérieure est effectuée dans un intervalle de temps prédéterminé ou dans un intervalle de vitesse de rotation prédéterminé du moteur primaire ayant comme extrémité inférieure une vitesse de rotation relative à ladite activation du signal de commande.

10. Procédé selon la Revendication 9, dans lequel lorsque ladite étape ultérieure est effectuée dans un intervalle de temps prédéterminé, l'intervalle de temps prédéterminé est fonction de la position d'un levier d'accélération.

11. Programme informatique comportant des moyens pour coder un programme, adapté pour réaliser toutes les étapes de l'une quelconque des revendications 1 à 10, lorsque ledit programme est exécuté sur un ordinateur.

12. Moyens lisibles par ordinateur comprenant un programme enregistré, lesdits moyens lisibles par ordinateur comprenant des moyens de codage de programme adaptés pour effectuer toutes les étapes de l'une quelconque des revendications 1 à 10, lorsque ledit programme est exécuté sur un ordinateur.

13. Véhicule agricole ou engin de terrassement comprenant une transmission hydraulique de type série, dans lequel une roue (W) du véhicule est entraînée en rotation par un moteur hydraulique (HM) à cylindrée variable, où la cylindrée est
- variable et fonction d'une charge appliquée à la roue en définissant un premier mode de fonctionnement e
- fixée à sa valeur de cylindrée maximale en raison de l'activation d'un signal de commande, définissant un second mode de fonctionnement,
**caractérisé en ce que** la transmission est conçue pour activer automatiquement ledit signal de commande lorsque l'une des conditions suivantes est vérifiée :
- un signal d'accélération est inférieur à un seuil prédéterminé (AC_TH) et la vitesse du véhicule est inférieure à un premier seuil de vitesse (SP_THI) ou
- le signal d'accélération est supérieur audit seuil prédéterminé (AC TH) et la vitesse du véhicule est inférieure à un second seuil de vitesse (SP TH2) inférieur au premier seuil de vitesse (SP_THI)
et pour désactiver automatiquement ledit signal de commande lorsqu'aucune desdites conditions n'est vérifiée.
